# EUROPEAN PATENT SPECIFICATION

(11) **EP 3 995 380 B1**
(45) Date of publication and mention of the grant of the patent: **10.12.2025**
(21) Application number: 20834472.1
(22) Date of filing: 17.06.2020
(51) Int. Cl.: B61D 33/00, B60N 2/14, B64D 11/06, B60N 2/01, B60N 2/06, B60N 2/07, B60N 2/24

(54) **STRUCTURE FOR CHANGING PASSENGER COMPARTMENT SEAT ARRANGEMENT**
STRUKTUR ZUR ÄNDERUNG DER SITZANORDNUNG EINES PASSAGIERRAUMES
STRUCTURE PERMETTANT DE CHANGER UN AGENCEMENT DE SIÈGE D'HABITACLE

(30) Priority: 02.07.2019 JP 2019123392
(43) Date of publication of application: 11.05.2022
(73) Proprietor: THK Co., Ltd., Tokyo 108-8506 (JP)
(72) Inventor: HOSAKA, Eiji, Tokyo 108-8506 (JP); BERGER, Torsten, Tokyo 108-8506 (JP); MOCHIZUKI, Hiroaki, Tokyo 108-8506 (JP); KURIBAYASHI, Hiroomi, Tokyo 108-8506 (JP); KANEKO, Akito, Tokyo 108-8506 (JP); SHOYU, Takahiro, Tokyo 108-8506 (JP); KUWAJIMA, Ayumi, Tokyo 108-8506 (JP); MINAMI, Toshiro, Tokyo 108-8506 (JP)
(74) Representative: Grünecker Patent- und Rechtsanwälte PartG mbB
(86) International application number: PCT/JP2020/023852
(87) International publication number: WO 2021/002204

(56) References cited:
- JP-A- 2000 025 494
- JP-A- 2018 118 608
- JP-A- H07 172 224
- JP-U- S5 747 536
- JP-U- S5 794 537

## Description

### TECHNICAL FIELD

The present invention relates to a structure for freely changing an arrangement interval of seats provided in a vehicle cabin of a railway vehicle, a bus, or the like.

### BACKGROUND ART

In a transport vehicle such as a railway vehicle or a bus, passenger seats are generally arranged along a side wall of a vehicle cabin. A space in the middle of the vehicle cabin is used as a standing space or an aisle space. As an arrangement of the seats in the vehicle cabin, a so-called long arrangement and a so-called cross arrangement are common. In the long arrangement, the seats are arranged in such a manner that backrest surfaces thereof are substantially parallel to a traveling direction of the vehicle. In the cross arrangement, the seats are arranged in such a manner that the backrest surfaces thereof are oriented in the traveling direction of the vehicle or a direction opposite to the traveling direction.

In the cross arrangement, the seats are arranged on a floor plate of the vehicle cabin at a regular interval. For example, the comfort of the passenger who is seated is superior as an arrangement interval of the seats is larger. However, when the arrangement pitch of the seats is large, a standing space or an aisle space is narrowed, with the result that the comfort of a passenger who cannot be seated is impaired. Thus, it is convenient if the arrangement of the seats in the vehicle cabin can be flexibly changed in accordance with an increase or decrease of the number of passengers such as a peak season or a low season. Further, even in the case of the long arrangement, if the seats can be freely moved along a side wall of the vehicle cabin and fixed, a wide space is defined in a part of the vehicle cabin, and the space can be used as a storage space for baggage, for example, a storage space for a suitcase or a bicycle of a passenger. Accordingly, the space in the vehicle cabin can be flexibly used, which is convenient.

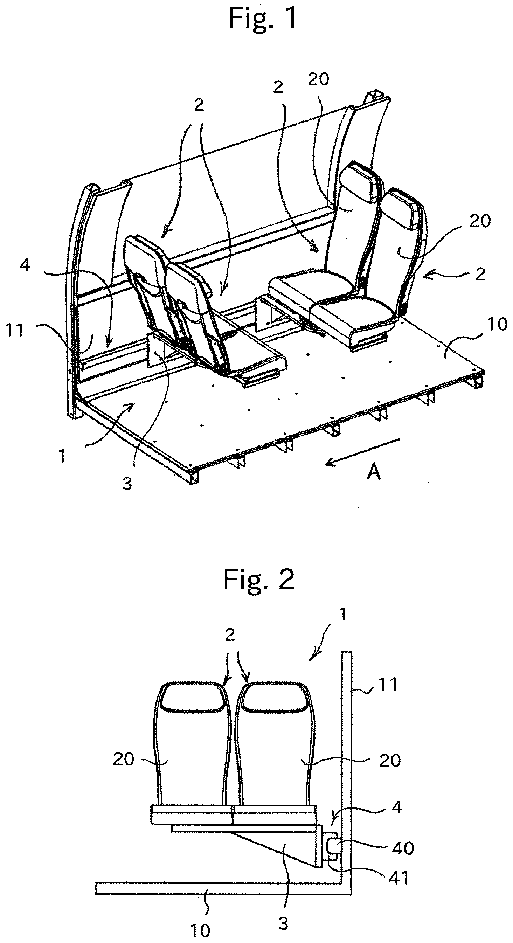

As a structure capable of changing the arrangement interval of the seats, a structure disclosed in Patent Literature 1 has been known. Patent Literature 1 discloses a structure for freely changing an arrangement interval of seats in a vehicle cabin of an aircraft. A rail is laid on a floor plate of the vehicle cabin, and the seats can be freely moved along the rail in the vehicle cabin and can be fixed at a suitable position on the rail. As a result, in the structure disclosed in Patent Literature 1, the arrangement interval of the seats in the vehicle cabin can be freely changed, and the limited space in the vehicle cabin can be flexibly used in accordance with the number of passengers, thereby being capable of improving the comfort of the passenger. Further relevant prior art is described in: Microfilm of the specification and drawings annexed to the request of Japanese Utility Model Application No. 123457/1980 (Laid-Open No. 47536/1982) (TENRYU INDUSTRIES CO., LTD.) 17 March 1982 (1982-03-17), page 2, line 9 to page 5, line 20, fig. 1-3; Microfilm of the specification and drawings annexed to the request of Japanese Utility Model Application No. 173712/1980 (Laid-Open No. 94537/1982) (TENRYU INDUSTRIES CO., LTD.) 10 June 1982 (1982-06-10), page 2, line 17 to page 6, line 20, fig. 1,2; JR2000-25494A (IKEDA CORP.) 25 January 2000 (2000-01-25), paragraphs [0009]-[0016], fig. 1-3.

### CITATION LIST

### PATENT LITERATURE

[PTL 1] JPH2-279433 A

### DISCLOSURE OF THE INVENTION

### PROBLEMS TO BE SOLVED BY THE INVENTION

In the changing structure for an arrangement interval of seats in a vehicle cabin disclosed in Patent Literature 1, legs extending downward from the seats are assembled to the rail laid on the floor plate. Thus, there are problems in that a space below the seats, that is, a space between the seats and a floor surface cannot be actively used due to hindrance by the legs, and that there is difficulty in cleaning the floor surface.

### MEANS FOR SOLVING THE PROBLEMS

The present invention has been made to solve the problems described above, and has an object to provide a changing structure for a seat arrangement, which is capable of freely adjusting an arrangement interval of seats in a vehicle cabin and effectively utilizing a space below the seats.

In particular, for solving the aforementioned problem a changing structure is provided having the features defined in claim 1. Further preferred embodiments are defined in the dependent claims.

### EFFECTS OF THE INVENTION

According to the present invention, the support frame that supports the seats can be freely moved along the guide rail due to the movement of the support slider, thereby being capable of freely adjusting the arrangement interval of the seats in the vehicle cabin. Further, the support frame supports the seats from below as the cantilever beam, and meanwhile, the support slider fixed to the base end portion of the support frame bears a load and a rotation moment acting from the support frame while freely moving along the guide rail. Thus, legs or the like are not required to be provided between the seats and the floor plate, thereby being capable of effectively using the space below the seats.

### BRIEF DESCRIPTION OF THE DRAWINGS

FIG. 1 is a schematic view for illustrating a first embodiment in which the present invention is applied to a seat arrangement in a vehicle cabin of a railway vehicle.
FIG. 2 is a schematic view for illustrating a changing structure for a seat arrangement in the first embodiment.
FIG. 3 is a perspective view for illustrating an example of a combination of a guide rail and a support slider which can be used for the changing structure for a seat arrangement according to the present invention.
FIG. 4 is a sectional view taken along the line IV-IV of FIG. 3.
FIG. 5 is a schematic view for illustrating a second embodiment of a changing structure for a seat arrangement to which the present invention is applied.
FIG. 6 is a schematic view for illustrating the changing structure for a seat arrangement in the second embodiment.
FIG. 7 is a schematic view for illustrating a modification example of the changing structure for a seat arrangement described in the second embodiment.
FIG. 8 is an exploded view for illustrating a third embodiment of a changing structure for a seat arrangement to which the present invention is applied.
FIG. 9 is a perspective view for illustrating an example of a linear guide that can be used in the third embodiment.
FIG. 10 is a perspective view for illustrating a coupling relationship between a seat mounting frame and a rotating support.
FIG. 11 is a bottom view for illustrating an example of the rotating support.
FIG. 12 is a plan view for illustrating a long arrangement of the seats in the changing structure for a seat arrangement of the third embodiment.
FIG. 13 is a plan view for illustrating a first step of a procedure of changing the long arrangement to a cross arrangement.
FIG. 14 is a plan view for illustrating a second step of the procedure of changing the long arrangement to the cross arrangement.
FIG. 15 is a plan view for illustrating a third step of the procedure of changing the long arrangement to the cross arrangement.

### MODE FOR CARRYING OUT OF THE INVENTION

A changing structure for a seat arrangement according to the present invention is now described in detail with reference to the accompanying drawings.

FIG. 1 is a view for illustrating a first embodiment in which the present invention is applied to an arrangement of seats 2 in a vehicle cabin 1 of a railway vehicle. FIG. 1 is an illustration of a state in which a roof structure is removed from the vehicle and the vehicle cabin 1 is cut in the middle of the vehicle cabin 1 in a width direction thereof. In this example, the arrangement of the seats 2 is a so-called cross arrangement, and each of the seats 2 is arranged in the vehicle cabin 1 under a state in which a backrest surface 20 is oriented in a traveling direction A of the vehicle or a direction opposite to the traveling direction.

In order that a space below the seats 2, that is, a space between a floor surface of the vehicle and the seats can be effectively utilized, the seats 2 are not provided on a floor plate 10 of the vehicle but are each supported by a support frame 3 projecting from a side structure 11 of the vehicle. Further, in order that an arrangement interval of the seats 2 in the vehicle cabin 1 can be freely changed, the support frames 3 are each mounted to the side structure 11 of the vehicle using a position changing mechanism 4.

FIG. 2 is a view for schematically illustrating a support structure for the seats 2 with respect to the side structure 11. As illustrated in FIG. 2, the seats 2 are mounted to the support frame 3, and the support frame 3 is fixed to the side structure 11 of the vehicle through intermediation of the position changing mechanism 4, and supports the seats 2 from below as a cantilever beam. The position changing mechanism 4 includes a guide rail 40 fixed to the side structure 11, and a support slider 41 assembled to the guide rail 40. The guide rail 40 is provided in parallel to the floor plate 10 and along a longitudinal direction of the vehicle cabin 1, and the support slider 41 can be freely moved along the guide rail 40. Further, the support slider 41 is fixed to a base end portion of the support frame 3 being the cantilever beam.

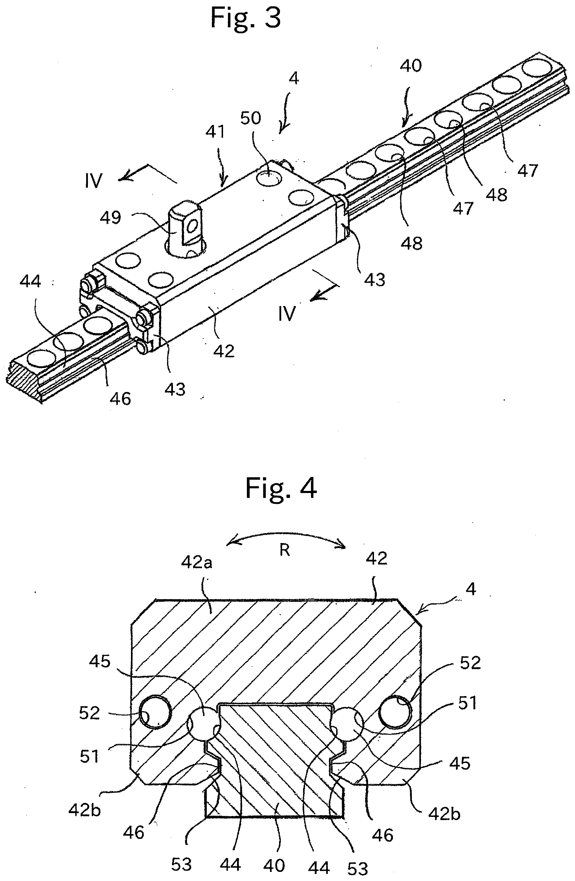

FIG. 3 and FIG. 4 are illustrations of an example of the position changing mechanism 4. FIG. 3 is a perspective view of the position changing mechanism 4, and FIG. 4 is a sectional view taken along the line IV-IV of FIG. 3.

The position changing mechanism 4 includes the guide rail 40 and the support slider 41. The guide rail 40 is an elongated member having a substantially rectangular shape in a cross section perpendicular to the longitudinal direction, and has rolling grooves 44 for balls, which are formed in outer surfaces along the longitudinal direction. The support slider 41 is assembled to the guide rail 40 through intermediation of a large number of balls 45 that roll on the rolling grooves. The rolling grooves 44 are formed in a pair on right and left sides of the guide rail 40. The rolling grooves 44 are each formed in a concave curved surface shape with an arc slightly larger than a spherical surface of the ball 45, and a depth of the rolling groove 44 with respect to the outer surface of the guide rail 40 is set slightly smaller than a radius of the ball 45.

Further, the outer surfaces of the guide rail 40 have locking grooves 46 formed in parallel to the rolling grooves 44. The locking grooves 46 are located below the rolling grooves 44, and the guide rail 40 has a substantially trapezoidal shape gradually narrowed toward the center of the guide rail 40 in a cross section perpendicular to the longitudinal direction. Further, a depth of the locking groove 46 is set larger than that of the rolling groove 44. The locking grooves 46 are formed in a pair on right and left sides of the guide rail 40.

The guide rail 40 has a plurality of fixing holes 47 and a plurality of positioning holes 48 which are formed alternately at predetermined intervals along the longitudinal direction. The fixing holes 47 are used for fixing the guide rail 40 to a structure such as the side structure 11 with bolts. Meanwhile, the positioning holes 48 are used for immovably fixing the support slider 41 at a specific position on the guide rail 40, and a locking pin 49 provided to the support slider 41 is inserted to the positioning hole 48 as appropriate.

The support slider 41 includes a block main body 42 formed in a substantially saddle shape so as to straddle the guide rail 40, a pair of lid members 43 mounted to both front and rear end surfaces of the block main body 42 in a moving direction thereof, and the locking pin 49 passing through the block main body 42.

The block main body 42 includes a base portion 42a having fastening holes 50 for fixing bolts, and a pair of skirt portions 42b hanging from the base portion 42a so as to cover the outer surfaces of the guide rail 40. The skirt portions 42b each have a load rolling groove 51 opposed to the rolling groove 44 of the guide rail 40, and the balls 45 roll while applying a load between the load rolling groove 51 of the block main body 42 and the rolling groove 44 of the guide rail 40. The skirt portion 42b has a ball return hole 52 formed in parallel to the load rolling groove 51, and the balls 45 roll inside the ball return hole 52 in a no-load state.

Each of the pair of lid members 43 has direction change paths in which the balls 45 roll in a no-load state. The direction change path is a path curved in a substantially U-shaped, and when the lid member 43 is fixed to the block main body 42, longitudinal end portions of the load rolling groove 51 and the ball return hole 52 formed in the block main body 42 are coupled to each other by the direction change path. That is, when the lid members 43 are fixed to both end surfaces of the block main body 42, respectively, each of the load rolling grooves 51 and each of the ball return holes 52 are coupled to each other, thereby completing endless circulation paths for the balls 45 in the support slider 41. Thus, in the position changing mechanism 4 illustrated in FIG. 3 and FIG. 4, the support slider 41 includes two endless circulation paths for the balls 45 corresponding to the pair of rolling grooves 44 formed in the guide rail 40.

Further, as illustrated in FIG. 4, the skirt portion 42b of the block main body 42 has a support protruding portion 53 in parallel to the load rolling groove 51. The support protruding portion 53 protrudes from an inner surface of the skirt portion 42b toward the guide rail 40, and is inserted into the locking groove 46 formed in the outer surface of the guide rail 40. A gap is defined between the support protruding portion 53 and the locking groove 46. The support protruding portion 53 does not come in contact with the guide rail 40 unless an excessive load acts on the support slider 41, and the support slider 41 can smoothly move on the guide rail 40 by rolling of the balls 45.

In the position changing mechanism 4 configured as described above, the rolling grooves 44 for the balls 45 are formed in the pair of outer surfaces of the guide rail 40, and the support slider 41 is assembled to the guide rail 40 through intermediation of the balls 45 that roll on the rolling grooves 44. Thus, the support slider 41 can be freely moved along the guide rail 40 while bearing any load acting in a direction orthogonal to a longitudinal direction of the guide rail 40.

Further, under the state in which the support slider 41 is assembled to the guide rail 40, the support protruding portions 53 of the block main body 42 are inserted into the locking grooves 46 of the guide rail 40. Thus, the support slider 41 cannot be separated from the guide rail 40 in the direction orthogonal to the longitudinal direction of the guide rail 40. Accordingly, even when an excessive moment load (load in the arrow R direction of FIG. 4) acts on the support slider 41 fixed to the support frame 3, for example, in accordance with the weight of a passenger seated on the seats 2, due to the contact between the support protruding portions 53 and the locking grooves 46, the assembled state of the support slider 41 with respect to the guide rail 40 is maintained, thereby being capable of holding the support frame 3 against the moment load.

In addition, the locking pin 49 is provided to the support slider 41, and the locking pin 49 passes through the support slider 41 to be inserted into the positioning hole 48 of the guide rail 40. The locking pin 49 is held by the support slider 41 under a state in which the locking pin 49 is urged toward the guide rail 40, and under a state in which no external force is applied to the locking pin 49, a distal end portion of the locking pin 49 is always inserted into the positioning hole 48 of the guide rail 40.

Under the state in which the locking pin 49 is inserted into the positioning hole 48, the support slider 41 cannot be moved with respect to the guide rail 40, and only when the locking pin 49 is removed from the positioning hole 48 against the urging force, the support slider 41 can be moved along the guide rail 40. That is, the locking pin 49 corresponds to a position fixing member in the present invention.

The position fixing member is not limited to the locking pin 49 mounted to the support slider 41, and may be any member as long as the member can reliably restrain a motion of the support slider 41 with respect to the guide rail 40. For example, the position fixing member may be a clamping member that is fixed to the guide rail 40 so as to sandwich the guide rail 40 and locks the motion of the support slider 41.

As illustrated in FIG. 2, the support slider 41 of the position changing mechanism 4 is fixed to the support frame 3 using the fastening holes 50. Further, the guide rail 40 of the position changing mechanism 4 is fixed to the side structure 11 of the vehicle with bolts in a horizontal direction. Although not illustrated, side columns are provided upright inside the side structure 11 along a vertical direction (up-and-down direction of the drawing sheet of FIG. 2) for the purpose of securing the strength of the side structure 11. Further, the plurality of side columns are arranged at predetermined intervals along a traveling direction of the vehicle (depth direction of the drawing sheet of FIG. 2). A rail mounting plate extending along the traveling direction of the vehicle is fixed to the plurality of those side columns, and the guide rail 40 is fixed to the rail mounting plate with bolts. Accordingly, a vertical load or a moment load acting on the guide rail 40 is born by the side columns through intermediation of the rail mounting plate. The structure of the side structure 11 described above is merely an example, and the fixing method for the guide rail can be appropriately changed in accordance with the concrete structure of the side structure.

Thus, in the arrangement example of the seats 2 illustrated in FIG. 1, when the support slider 41 of the position changing mechanism 4 is moved along the guide rail 40, the support frame 3 having the seats 2 mounted thereon is moved together with the seats 2 along the side structure 11, and the arrangement interval of the seats 2 in a so-called cross arrangement can be freely changed along the traveling direction of the vehicle. Further, through operation of the locking pin 49 provided to the support slider 41, movement or fixing of the support slider 41 with respect to the guide rail 40 can be freely selected, thereby being capable of readily changing the arrangement interval of the seats 2.

In addition, the support slider 41 of the position changing mechanism 4 can be pulled out from the end portion of the guide rail 40 in the longitudinal direction. Thus, a seat mounting position at which the guide rail 40 is interrupted is provided at any position of the side structure 11 of the vehicle so that, at the position, the support slider 41 can be pulled out from the guide rail 40 or can be assembled to the guide rail 40. Accordingly, the seats 2 can be freely installed on or removed from the vehicle cabin 1.

According to such a changing structure for a seat arrangement, the arrangement interval of the seats 2 in the vehicle cabin 1 can be freely changed, and the arrangement of the seats 2 in the vehicle cabin 1 can be flexibly changed in accordance with an increase or decrease of the number of passengers such as a peak season or a low season. Further, the support frame 3 supports the seats 2 from below as the cantilever beam. Thus, a space can be defined between the seats 2 and the floor plate 10, and the comfort of the vehicle cabin 1 can be enhanced by effectively utilizing the space. Further, legs of the seats 2 are not connected to the floor surface, and hence the floor surface can be easily cleaned.

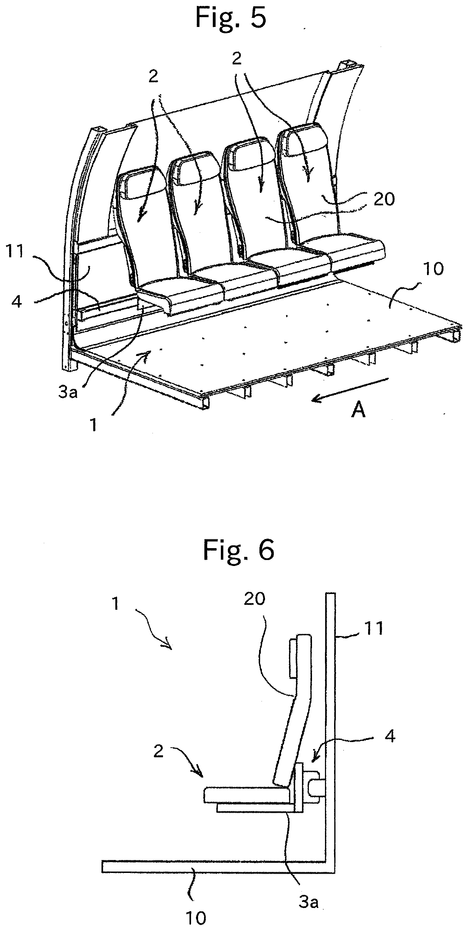

Meanwhile, FIG. 5 is a view for illustrating a second embodiment in which the present invention is applied to the arrangement of the seats 2 in the vehicle cabin 1 of the railway vehicle. FIG. 5 is an illustration of an example in which the seats 2 are arranged in a so-called long arrangement in the vehicle cabin 1, and the backrest surface 20 of each of the seats 2 is provided in parallel to the traveling direction A of the vehicle. Also in this example, in order that a space below the seats 2, that is, a space between the floor plate 10 of the vehicle and the seats 2 can be effectively utilized, the seats 2 are not provided on the floor plate 10 of the vehicle but are each supported by a support frame 3a projecting from the side structure 11 of the vehicle. Further, in order that an arrangement of the seats 2 with respect to the traveling direction A of the vehicle can be freely changed, the support frames 3a are each mounted to the side structure 11 of the vehicle using the position changing mechanism 4 described above.

FIG. 6 is a view for schematically illustrating a support structure for the seats 2 with respect to the side structure 11. As illustrated in FIG. 6, the seats 2 are mounted to the support frame 3a, and the support frame 3a is fixed to the side structure 11 of the vehicle through intermediation of the position changing mechanism 4, and supports the seats 2 from below as a cantilever beam. The position changing mechanism 4 is the same as that illustrated in FIG. 3 and FIG. 4, and description thereof is omitted here.

Thus, in the arrangement example of the seats 2 illustrated in FIG. 5, when the support slider 41 is moved along the guide rail 40, the support frame 3 having the seats 2 mounted thereon is moved along the side structure 11 together with the seats 2, and the arrangement of the seats 2 in the vehicle cabin 1 can be freely changed along the traveling direction of the vehicle. Further, through operation of the locking pin 49 provided to the support slider 41, movement or fixing of the support slider 41 with respect to the guide rail 40 can be freely selected, thereby being capable of readily changing the arrangement interval of the seats 2.

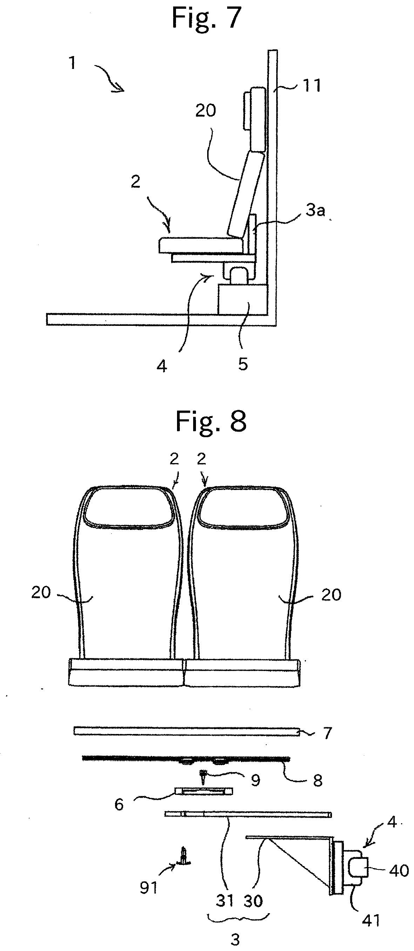

The linear guide 4 is not necessarily required to be fixed to the side structure 11 of the vehicle, and as illustrated in FIG. 7, a spacer block 5 may be provided at a corner portion at which the floor plate 10 and the side structure 11 intersect, and the guide rail 40 of the position changing mechanism 4 may be fixed onto the spacer block 5 in the vertical direction along the side structure 11. Even in such a structure, the support frame 3a is supported on the position changing mechanism 4 as the cantilever beam, thereby being capable of effectively utilizing the space between the floor surface of the vehicle and the seats 2.

Next, a third embodiment of a changing structure for a seat arrangement to which the present invention is applied is described.

In the changing structure for a seat arrangement described in the third embodiment, similarly to the first embodiment and the second embodiment described above, the arrangement of the seats 2 in the vehicle cabin 1 can be changed along the traveling direction of the vehicle. In addition, the seats 2 which are arranged in the cross arrangement can be rearranged in the long arrangement, or the seats 2 which are arranged in the long arrangement can be rearranged in the cross arrangement.

FIG. 8 is a view for illustrating the changing structure for a seat arrangement in the third embodiment, and is an exploded view of components of the changing structure. The changing structure illustrated in FIG. 8 includes the above-mentioned position changing mechanism 4 including the guide rail 40 and the support slider 41, the support frame 3 that supports the seats 2, a rotating support 6 that is fixed to the support frame 3 and serves as a center of rotation of the seats 2, a seat mounting frame 7 that fixes the seats 2, and a linear guide 8 provided along the width direction of the seats 2 and arranged between the seat mounting frame 7 and the rotating support 6.

In this embodiment, the support frame 3 includes a support member 30 and a base plate 31. The support member 30 has a substantially L-like shape, and is fixed to the support slider. The base plate 31 is supported by the support member 30 from below. The rotating support 6 is fixed to the base plate 31.

The seat mounting frame 7 is formed in an elongated shape in the width direction of each of the seats 2 so that a plurality of the seats 2 can be arranged in parallel. In this embodiment, two seats 2 fixed to the seat mounting frame 7 are integrated to form a seat set. An orientation of the backrest surfaces 20 of the seat set can be changed by 90 degrees.

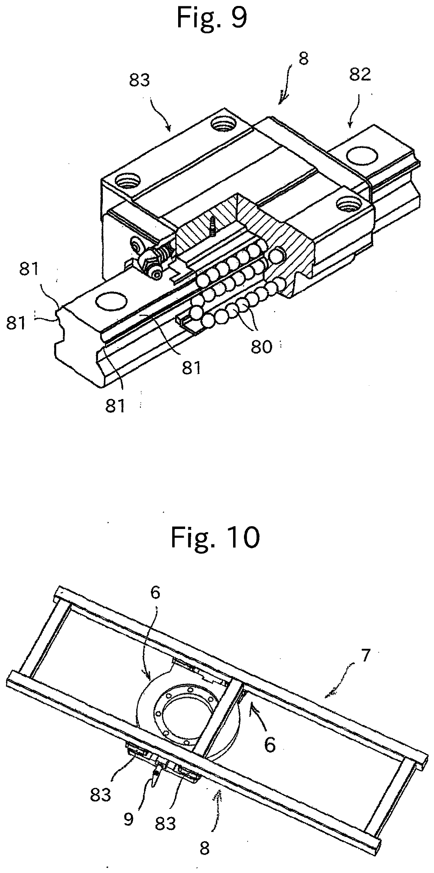

FIG. 9 is a view for illustrating an example of the linear guide 8 to be fixed to the seat mounting frame 7. The linear guide 8 includes a track rail 82 and moving blocks 83. The track rail 82 has rolling surfaces 81 for rolling elements 80 such as balls or rollers. The rolling surfaces 81 are formed along a longitudinal direction of the track rail 82. Each of the moving blocks 83 freely makes a linear motion along the longitudinal direction of the track rail 82. Each of the moving blocks 83 is assembled to the track rail 82 through intermediation of a plurality of rolling elements 80. An endless circulation path for the rolling elements 80 is formed inside each of the moving blocks 83. Each of the moving blocks 83 can bear any load acting on surfaces orthogonal to the longitudinal direction of the track rail 82 under a state in which each of the moving blocks 83 is assembled to the track rail 82.

As illustrated in FIG. 10, in this embodiment, two linear guides 8 are provided to the seat mounting frame 7. Two track rails 82 are fixed to a lower surface of the seat mounting frame 7 so as to be in parallel. The longitudinal direction of the track rail 82 matches a longitudinal direction of the seat mounting frame 7, specifically, the width direction of the seats 2. Meanwhile, two moving blocks 83 are mounted to each of the track rails 82. The moving blocks 83 are fixed to the rotating support 6. Thus, the seat mounting frame 7 can be freely moved together with the track rails 82 in the width direction of the seats 2 with respect to the rotating support 6.

Further, a seat fixing member 9 configured to lock movement of the seat mounting frame 7, which is performed through the linear guides 8, is provided to the rotating support 6. The seat fixing member 9 is fixed to the rotating support 6 in such a manner as to be located between the two moving blocks 83 assembled to the track rail 82. The seat fixing member 9 is a clamping device that sandwiches the track rail 82, and with use of the seat fixing member 9, movement of the seat mounting frame 7 with respect to the rotating support 6 is locked so that the seat mounting frame 7 can be fixed to the support frame 3 at a suitable position.

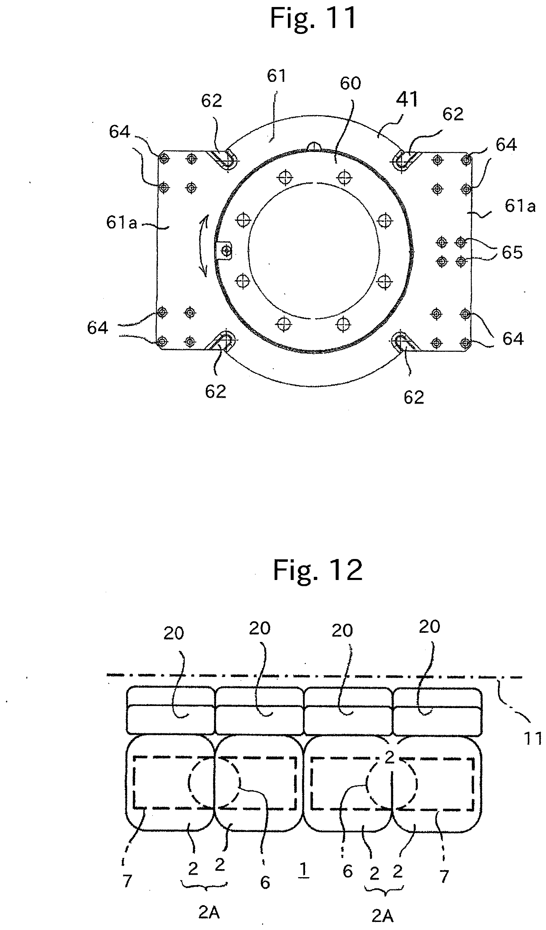

FIG. 11 is a view for illustrating an example of the rotating support 6 provided between the support frame 3 and the linear guides 8. The rotating support 6 includes an inner ring 60 and an outer ring 61. The inner ring 60 and the outer ring 61 are rotatable with respect to each other. Any one of the inner ring 60 and the outer ring 61 is fixed to the base plate 31 of the support frame 3, and another one thereof is fixed to the moving blocks 83 of the linear guides 8. In this embodiment, the inner ring 60 is fixed to the base plate 31, and the outer ring 61 is fixed to the moving blocks 83. Thus, the outer ring 61 has a pair of the flange portions 61a configured to fix the moving blocks 83 thereon. A plurality of mounting holes 64 for fixing bolts are formed in each of the flange portions 61a. Further, the seat fixing member 9 is also fixed to one of the pair of the flange portions 61a, and mounting holes 65 for fixing bolts for the fixation of the seat fixing member 9 are formed in the flange portion 61a.

A plurality of rolling elements such as balls or rollers are arranged between the inner ring 60 and the outer ring 61. When the rolling elements roll between the inner ring 60 and the outer ring 61, the outer ring 61 can be freely rotated with respect to the inner ring 60 fixed to the base plate 31.

As illustrated in FIG. 8, a stopper pin 91 being a rotation stopping member is provided to the base plate 31. The stopper pin 91 is configured to lock rotation of the outer ring 61 with respect to the base plate. The stopper pin 91 passes through the base plate 31, and a distal end of the stopper pin 91 is fitted into a locking groove 62 (see FIG. 11) formed in the outer ring 61. The stopper pin 91 is always urged toward the outer ring 61 by a coil spring (not shown), and the distal end of the stopper pin 91 always protrudes upward beyond the base plate 31 to be inserted into the locking groove 62. Further, a handle is provided at a lower end of the stopper pin 91. When the operation handle is pulled downward, the distal end of the stopper pin 91 is removed from the locking groove 62.

As illustrated in FIG. 11, the outer ring 61 has a plurality of locking grooves 62. The locking grooves 62 are formed around a center of rotation of the outer ring 61 at predetermined angular intervals. In the illustrated example, four locking grooves 62 are formed at intervals of 90 degrees. The locking grooves 62 allow the outer ring 61 to be fixed at four positions through rotation of the outer ring 61 by 90 degrees with respect to the base plate 31 at a time. The number of the positions at which the locking grooves 62 are formed in the outer ring 61 are not limited to four. Design may be suitably changed in such a manner that, for example, eight locking grooves are formed at intervals of 45 degrees.

Next, a procedure of changing the arrangement of the seats 2 in the vehicle cabin 1 from the long arrangement to the cross arrangement in the vehicle cabin 1 with use of the changing structure is described. FIG. 12 is a plan view for illustrating an example in which the seats 2 are arranged in the long arrangement along the side structure 11 (indicated by a long dashed short dashed line of FIG. 11) of the vehicle cabin 1. The seats 2 are grouped into the seat sets 2A, each including two seats 2 integrated with each other, and each of the seat sets 2A is mounted to the supporting frame 3. In the long arrangement, each of the seats 2 is arranged with the backrest surface 20 oriented in a direction toward the middle of the vehicle cabin 1 (downward direction of FIG. 11).

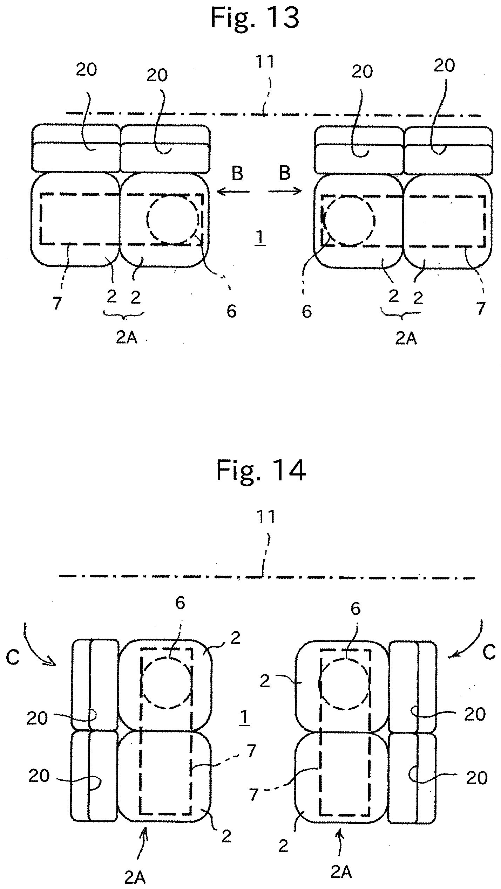

When the long arrangement is changed to the cross arrangement, the seat fixing member 9, which has gripped the track rail 82, is first released from the track rail 82 so as to allow free movement of the seat mounting frame 7 with respect to the rotating support 6. After that, as illustrated in FIG. 13, the seat sets 2A, each being fixed to the seat mounting frame 7, are moved in the width direction (direction indicated by the arrow B) of the seat sets 2A. The linear guides 8 provided between the rotating support 6 and the seat mounting frame 7 can bear any load acting in a direction orthogonal to a moving direction of the track rails 82. Thus, even when a center of gravity of the seat set 2A is considerably shifted from a position above the rotating support 6, the seat set 2A is held on the support frame 3 without being inclined.

After completion of the movement of each of the seat sets 2A in the width direction, the stopper pin 91 is operated to allow the rotation of the inner ring of the rotating support 6 with respect to the base plate 31 so that the seat mounting frame 7 can be rotated with respect to the support frame 3. After that, as illustrated in FIG. 14, each of the seat sets 2A, which is fixed to the seat mounting frame 7, is rotated by 90 degrees in a direction indicated by the arrow C about the rotating support 6. As a result of the movement of the seat set 2A in the width direction of the seat set 2A in the procedure described above, a center of rotation of the rotating support 6 is located in the vicinity of an end portion of the seat set 2A in the width direction. Thus, even when the seat set 2A is rotated, interference of the seats 2 themselves with the side structure 11 of the vehicle cabin 1 can be avoided. As a result, the backrest surfaces 20 of the seats 2 are oriented in the traveling direction of the vehicle or the direction opposite to the traveling direction. At this time, a space is defined between the seats 2 after being rotated and the side structure 11 of the vehicle cabin 1.

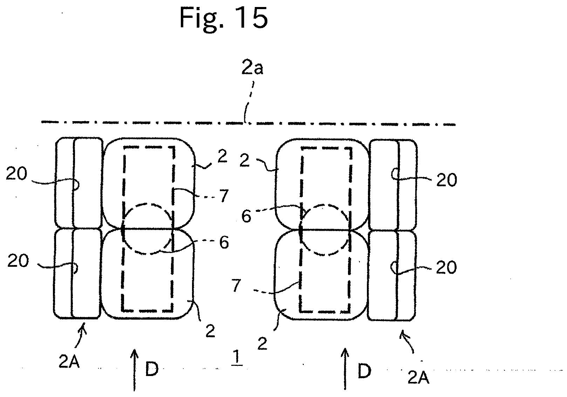

Then, as illustrated in FIG. 15, after each of the seat sets 2A is pushed toward the side structure 11 of the vehicle cabin 1 along the direction indicated by the arrow D, the change of the arrangement of the seat sets to the cross arrangement is completed. At this time, a distance between the side structure 11 of the vehicle cabin 1 and the seats 2 can be suitably set. After the completion of the change of the arrangement of each of the seat sets 2A, the seat mounting frame 7 is fixed with respect to the support frame 3 with use of the stopper pin 91 and the seat fixing member 9.

The procedure of changing the long arrangement of the seat sets 2A to the cross arrangement has been described. The cross arrangement of the seat sets 2A can be changed to the long arrangement in a reverse procedure. In this case, each of the seat sets 2A can be freely moved in the width direction of the seat 2 with respect to the support frame 3. Thus, after being rearranged in the long arrangement, two seat sets 2A adjacent to each other can be tightly arranged without leaving any gap therebetween. Thus, a space of the vehicle cabin can be effectively utilized.

As described above, according to the changing structure for a seat arrangement of the third embodiment, the arrangement interval of the seats 2 in the vehicle cabin 1 can be freely changed along the traveling direction of the vehicle, and in addition, the arrangement of the seats 2 in the vehicle cabin 1 can be freely changed to the cross arrangement or the long arrangement. Thus, the arrangement of the seats 2 in the vehicle cabin 1 can be flexibly changed in accordance with an increase or decrease of the number of passengers such as a peak season or a low season. Further, a space can be defined between the seats 2 and the floor plate 10 while the seat arrangement can be flexibly changed as described above. Thus, the space can be effectively utilized to improve the comfort of the vehicle cabin 1, and the floor surface can be easily cleaned.

## Claims

1. A changing structure for a seat arrangement for freely changing an arrangement interval of seats (2) in a vehicle cabin (1) of a vehicle, the changing structure comprising:
a support frame (3) configured to support the seats (2) from below as a cantilever beam to define a space between the seats (2) and a floor plate (10) of the vehicle;
a guide rail (40) having rolling grooves (44) for balls which are formed in outer surfaces of the guide rail (40) along a longitudinal direction thereof, and provided along a side structure (11) of the vehicle along a longitudinal direction of the vehicle cabin (1), wherein the rolling grooves (44) are formed in a pair on opposite sides of the guide rail (40);
a support slider (41), which is fixed to a base end portion of the support frame (3) and is assembled to the guide rail (40) through intermediation of balls (45) that roll on the rolling grooves (44), and is freely movable along the guide rail (40) while bearing a load and a rotation moment acting from the support frame (3); and
a position fixing member (49) configured to fix the support slider (41) to the guide rail (40). **characterized in that**
the guide rail (40) has on an outer surfaces thereof locking grooves (46) formed in parallel to the rolling grooves (44), wherein the locking grooves (46) are located below the rolling grooves (44), wherein the guide rail (40) has a trapezoidal shape gradually narrowed toward the center of the guide rail (40) in a cross section perpendicular to the longitudinal direction and a depth of the respective locking groove (46) is set larger than that of the rolling groove (44), wherein the locking grooves (46) are formed in a pair on right and left sides of the guide rail (40),
the support slider (41) includes a block main body (42) formed in a substantially saddle shape so as to straddle the guide rail (40), wherein the block main body (42) includes a base portion (42a) and a pair of skirt portions(42b) hanging from the base portion (42a) so as to cover the outer surfaces of the guide rail (40), wherein the skirt portions (42b) each have a load rolling groove (51) opposed to the rolling groove (44) of the guide rail (40), and the balls (45) roll while applying a load between the load rolling groove (51) of the block main body (42) and the rolling groove (44) of the guide rail (40), wherein the skirt portion (42b) has a ball return hole (52) formed in parallel to the load rolling groove (51), and the balls (45) roll inside the ball return hole (52) in a no-load state . wherein the skirt portion (42b) of the block main body (42) has a support protruding portion (53) in parallel to the load rolling groove (51) , wherein the support protruding portion (53) protrudes from an inner surface of the skirt portion (42b) toward the guide rail (40), and is inserted into the locking groove (46) formed in the outer surface of the guide rail (40), wherein a gap is defined between the support protruding portion (53) and the locking groove (46), wherein the support protruding portion (53) does not come in contact with the guide rail (40) unless an excessive load acts on the support slider (41), and wherein
the support protruding portion (53) contacts the locking groove (46) of the guide rail (40) according to the moment load acting on the support slider (41) from the support frame (3), the support slider (41) thereby holds the support frame (3) against the moment load.

2. The changing structure for a seat arrangement according to claim 1, further comprising:
a seat fixing base on which the seats (2) are mounted;
a rotating support (6), which is provided between the support frame (3) and the seat fixing base, and is configured to serve as a center of rotation of the seats (2);
a linear guide (4), which is provided along a width direction of the seats (2) with respect the seat fixing base, and is configured to guide movement of the seat fixing base with respect to the rotating support (6);
a rotation stopping member (91) configured to lock rotation of the seat fixing base with respect to the support frame (3); and
a seat fixing member (9) configured to lock the movement of the seat fixing base with respect to the rotating support (6).

3. The changing structure for a seat arrangement according to claim 1 or 2, wherein the guide rail (40) is fixed to the side structure (11) in a horizontal direction.

4. The changing structure for a seat arrangement according to claim 1 or 2, wherein the guide rail (40) is fixed in a vertical direction to a spacer block (5) provided in the vehicle cabin along the side structure (11).

## Patentansprüche

1. Eine Umstellstruktur für eine Sitzanordnung zum freien Verändern eines Anordnungsabstands von Sitzen (2) in einer Fahrzeugkabine (1) eines Fahrzeugs, wobei die Umstellstruktur umfasst:
einen Stützrahmen (3), der so konfiguriert ist, dass er die Sitze (2) von unten als Auslegerbalken stützt, um einen Raum zwischen den Sitzen (2) und einer Bodenplatte (10) des Fahrzeugs zu definieren;
eine Führungsschiene (40) mit Rollnuten (44) für Kugeln, die in äußeren Oberflächen der Führungsschiene (40) entlang ihrer Längsrichtung ausgebildet sind und entlang einer Seitenstruktur (11) des Fahrzeugs entlang einer Längsrichtung des Fahrzeuginnenraums (1) vorgesehen sind, wobei die Rollnuten (44) paarweise auf gegenüberliegenden Seiten der Führungsschiene (40) ausgebildet sind;
einen Stützschieber (41), der an einem Basisendabschnitt des Stützrahmens (3) befestigt ist und über Kugeln (45), die auf den Rollnuten (44) rollen, mit der Führungsschiene (40) verbunden ist und entlang der Führungsschiene (40) frei beweglich ist, während er eine Last und ein Drehmoment trägt, die vom Stützrahmen (3) ausgeübt werden; und
ein Positionsfixierelement (49), das so konfiguriert ist, dass es den Stützschieber (41) an der Führungsschiene (40) fixiert,
**dadurch gekennzeichnet, dass**
die Führungsschiene (40) an ihrer äußeren Oberfläche Verriegelungsnuten (46) aufweist, die parallel zu den Rollnuten (44) ausgebildet sind, wobei sich die Verriegelungsnuten (46) unterhalb der Rollnuten (44) befinden, wobei die Führungsschiene (40) eine trapezförmige Form aufweist, die sich in einem Querschnitt senkrecht zur Längsrichtung allmählich zur Mitte der Führungsschiene (40) hin verjüngt, und wobei die Tiefe der jeweiligen Verriegelungsnut (46) größer als die der Rollnut (44) ist, wobei die Verriegelungsnuten (46) paarweise auf der rechten und linken Seite der Führungsschiene (40) ausgebildet sind,
der Stützschieber (41) einen Blockhauptkörper (42) umfasst, der im Wesentlichen sattelförmig ausgebildet ist, um die Führungsschiene (40) zu überspannen, wobei der Blockhauptkörper (42) einen Basisabschnitt (42a) und ein Paar Schürzenabschnitte (42b) umfasst, die vom Basisabschnitt (42a) herabhängen, um die äußeren Oberflächen der Führungsschiene (40) abzudecken (40) abzudecken, wobei die Schürzenabschnitte (42b) jeweils eine Lastrollnut (51) aufweisen, die der Rollnut (44) der Führungsschiene (40) gegenüberliegt, und die Kugeln (45) rollen, während sie eine Last zwischen der Lastrollnut (51) des Blockhauptkörpers (42) und der Rollnut (44) der Führungsschiene (40) eine Lastrollnut (51) gegenüberliegend aufweisen, wobei der Randabschnitt (42b) ein parallel zur Lastrollnut (51) ausgebildetes Kugelrückführloch (52) aufweist und die Kugeln (45) in einem lastfreien Zustand innerhalb des Kugelrückführlochs (52) rollen, wobei der Randabschnitt (42b) des Blockhauptkörpers (42) einen Stützvorsprung (53) parallel zur Lastrollnut (51) aufweist, wobei der Stützvorsprung (53) von einer inneren Oberfläche des Randabschnitts (42b) in Richtung der Führungsschiene (40) vorsteht und in die in der äußeren Oberfläche der Führungsschiene (40) ausgebildete Verriegelungsnut (46) eingeführt ist, wobei zwischen dem Stützvorsprung (53) und der Verriegelungsnut (46) ein Spalt definiert ist, wobei der Stützvorsprung (53) nicht mit der Führungsschiene (40) in Kontakt kommt, es sei denn, eine übermäßige Last wirkt auf den Stützschieber (41), und wobei
der vorstehende Stützabschnitt (53) die Verriegelungsnut (46) der Führungsschiene (40) entsprechend der auf den Stützschieber (41) vom Stützrahmen (3) einwirkenden Momentbelastung berührt, wodurch der Stützschieber (41) den Stützrahmen (3) gegen die Momentbelastung hält.

2. Die veränderbare Struktur für eine Sitzanordnung gemäß Anspruch 1, die ferner umfasst:
eine Sitzbefestigungsbasis, auf der die Sitze (2) montiert sind;
eine Drehlagerung (6), die zwischen dem Stützrahmen (3) und der Sitzbefestigungsbasis vorgesehen ist und so konfiguriert ist, dass sie als Drehpunkt der Sitze (2) dient;
eine Linearführung (4), die entlang einer Breitenrichtung der Sitze (2) in Bezug auf die Sitzbefestigungsbasis vorgesehen ist und so konfiguriert ist, dass sie die Bewegung der Sitzbefestigungsbasis in Bezug auf die Drehlagerung (6) führt;
ein Drehstoppelement (91), das so konfiguriert ist, dass es die Drehung der Sitzbefestigungsbasis in Bezug auf den Stützrahmen (3) arretiert; und
ein Sitzbefestigungselement (9), das so konfiguriert ist, dass es die Bewegung der Sitzbefestigungsbasis in Bezug auf die Drehlagerung (6) arretiert.

3. Die Umstellstruktur für eine Sitzanordnung gemäß Anspruch 1 oder 2, wobei die Führungsschiene (40) in horizontaler Richtung an der Seitenstruktur (11) befestigt ist.

4. Die Umstellstruktur für eine Sitzanordnung gemäß Anspruch 1 oder 2, wobei die Führungsschiene (40) in vertikaler Richtung an einem Abstandhalterblock (5) befestigt ist, der in der Fahrzeugkabine entlang der Seitenstruktur (11) vorgesehen ist.

## Revendications

1. Structure changeante pour un agencement de sièges afin de changer librement un intervalle d'agencement de sièges (2) dans un habitacle de véhicule (1) d'un véhicule, la structure changeante comprenant :
un cadre de support (3) configuré pour supporter les sièges (2) par le bas comme une poutre en porte-à-faux pour définir un espace entre les sièges (2) et une plaque de plancher (10) du véhicule ;
un rail de guidage (40) ayant des rainures de roulement (44) pour des billes qui sont formées dans des surfaces extérieures du rail de guidage (40) le long d'une direction longitudinale de celui-ci, et disposé le long d'une structure latérale (11) du véhicule le long d'une direction longitudinale de l'habitacle de véhicule (1), dans laquelle les rainures de roulement (44) sont formées par paire sur des côtés opposés du rail de guidage (40) ;
un coulisseau de support (41), qui est fixé à une partie d'extrémité de base du cadre de support (3) et est assemblé au rail de guidage (40) par l'intermédiaire de billes (45) qui roulent sur les rainures de roulement (44), et est librement mobile le long du rail de guidage (40) tout en portant une charge et un moment de rotation agissant depuis le cadre de support (3) ; et
un élément de fixation de position (49) configuré pour fixer le coulisseau de support (41) au rail de guidage (40),
**caractérisée en ce que**
le rail de guidage (40) présente sur des surfaces extérieures de celui-ci des rainures de verrouillage (46) formées parallèlement aux rainures de roulement (44), dans laquelle les rainures de verrouillage (46) sont situées au-dessous des rainures de roulement (44), dans laquelle le rail de guidage (40) a une forme trapézoïdale progressivement rétrécie vers le centre du rail de guidage (40) dans une section transversale perpendiculaire à la direction longitudinale et une profondeur de la rainure de verrouillage (46) respective est établie plus grande que celle de la rainure de roulement (44), dans laquelle les rainures de verrouillage (46) sont formées par paire sur les côtés droit et gauche du rail de guidage (40),
le coulisseau de support (41) comporte un corps principal en bloc (42) formé selon une forme sensiblement de selle de manière à enfourcher le rail de guidage (40),
dans laquelle le corps principal en bloc (42) comporte une partie de base (42a) et une paire de parties de jupe (42b) suspendues à la partie de base (42a) de manière à couvrir les surfaces extérieures du rail de guidage (40), dans laquelle les parties de jupe (42b) ont chacune une rainure de roulement de charge (51) opposée à la rainure de roulement (44) du rail de guidage (40), et les billes (45) roulent tout en appliquant une charge entre la rainure de roulement de charge (51) du corps principal en bloc (42) et la rainure de roulement (44) du rail de guidage (40), dans laquelle la partie de jupe (42b) a un trou de retour de billes (52) formé parallèlement à la rainure de roulement de charge (51), et les billes (45) roulent à l'intérieur du trou de retour de billes (52) dans un état sans charge, dans laquelle la partie de jupe (42b) du corps principal en bloc (42) a une partie en saillie de support (53) parallèle à la rainure de roulement de charge (51), dans laquelle la partie en saillie de support (53) fait saillie à partir d'une surface intérieure de la partie de jupe (42b) vers le rail de guidage (40), et
est insérée dans la rainure de verrouillage (46) formée dans la surface extérieure du rail de guidage (40), dans laquelle un espace est défini entre la partie en saillie de support (53) et la rainure de verrouillage (46), dans laquelle la partie en saillie de support (53) ne vient pas en contact avec le rail de guidage (40) à moins qu'une charge excessive n'agisse sur le coulisseau de support (41), et dans laquelle la partie en saillie de support (53) entre en contact avec la rainure de verrouillage (46) du rail de guidage (40) en fonction de la charge de moment agissant sur le coulisseau de support (41) à partir du cadre de support (3), le coulisseau de support (41) maintient ainsi le cadre de support (3) contre la charge de moment.

2. Structure changeante pour un agencement de sièges selon la revendication 1, comprenant en outre :
une base de fixation de sièges sur laquelle les sièges (2) sont montés ;
un support rotatif (6), qui est disposé entre le cadre de support (3) et la base de fixation de sièges, et qui est configuré pour servir de centre de rotation des sièges (2) ;
un guide linéaire (4), qui est disposé le long d'une direction de largeur des sièges (2) par rapport à la base de fixation de sièges, et est configuré pour guider un mouvement de la base de fixation de sièges par rapport au support rotatif (6) ;
un élément d'arrêt de rotation (91) configuré pour verrouiller la rotation de la base de fixation de sièges par rapport au cadre de support (3) ; et
un élément de fixation de sièges (9) configuré pour verrouiller le mouvement de la base de fixation de sièges par rapport au support rotatif (6).

3. Structure changeante pour un agencement de sièges selon la revendication 1 ou 2, dans laquelle le rail de guidage (40) est fixé à la structure latérale (11) dans une direction horizontale.

4. Structure changeante pour un agencement de sièges selon la revendication 1 ou 2, dans laquelle le rail de guidage (40) est fixé dans une direction verticale à un bloc d'espacement (5) disposé dans l'habitacle de véhicule le long de la structure latérale (11).
